# EUROPEAN PATENT APPLICATION

(11) **EP 4 663 291 A1**
(43) Date of publication of application: **17.12.2025**
(21) Application number: 24382634.4
(22) Date of filing: 12.06.2024
(51) Int. Cl.: B01J 29/65, B01J 35/00, B01J 35/50, B01J 35/61, B01J 35/63, B01J 37/10

(54) **HYBRID COMPOSITION COMPRISING A CATALYTIC PHASE AND AN EMBEDDED HEATING PHASE**

(71) Applicant: Universitat D'Alacant / Universidad de Alicante, 03690 San Vicente del Raspeig-Alicante (ES); Universidade Federal do Rio de Janeiro, 21941-901 Rio de Janeiro (BR)
(72) Inventor: GARCÍA MARTÍNEZ, Javier, 03690 San Vicente del Raspeig (Alicante) (ES); RIBEIRO DE ALMEIDA, João Monnerat Araújo, 21941-901 Rio de Janeiro RJ (BR); ROMANO, Pedro Nothaft, 21941-901 Rio de Janeiro RJ (BR); TELLES DE SOUZA, Julia, 21941-901 Rio de Janeiro RJ (BR); FERREIRA YOUNG, Alexandre, 21941-901 Rio de Janeiro RJ (BR)
(74) Representative: TRBL Intellectual Property

(57) **Abstract**

The present invention relates to a catalytic composition comprising a catalytic phase and a heating phase, wherein the heating phase is embedded within the catalytic phase. The invention also refers to a method for the preparation of the catalytic composition, wherein the catalytic phase is synthesised in the presence of the heating phase such that the heating phase is embedded within the catalytic phase. Finally, the invention relates to uses of the catalytic composition as a catalyst in a chemical reaction, as an adsorbent in drying, purification or separation processes, or as an ion exchanger.

## Description

### FIELD OF THE INVENTION

The present invention belongs to the technical field of catalysed reactions assisted by microwave (MW) or by induction heating. More specifically, the invention relates to catalysts that incorporate additives with high MW and induction absorbing capacities.

### BACKGROUND OF THE INVENTION

Many catalytic solids, including metal oxides such as zeolites, are widely used in different industrial processes. In the context of catalysed industrial reactions, heating, particularly microwave (MW) and induction heating, is commonly used to accelerate said industrial reactions. However, these catalytic solids typically have low MW and induction absorbing capacity.

For this reason, high MW and induction absorbing additives such as SiC are mixed with the solid catalysts. Intimate contact between the two phases is required as this contact largely determines the effectiveness of the additive in heating the catalytic phase. To date, the heating material and the catalytic material are often simply mixed. However, a number of different solutions are known in the art. For example, propylene selectivity can be improved in methanol-to-hydrocarbon conversion using ZSM-5 coated SiC foams (Xiaoxia Ou et al., "A novel microwave-assisted methanol-to-hydrocarbons process with a structured ZSM-5/SiC foam catalyst: Proof-of-concept and environmental impacts", Chemical Engineering Science, Volume 255, 29 June 2022, 117669). A similar approach applied to plastics pyrolysis achieved improved selectivity and conversion, demonstrating the effectiveness of SiC-zeolite composites (Zhaohui Chen et al., "Microwave-responsive SiC foam@zeolite core-shell structured catalyst for catalytic pyrolysis of plastics", Environmental Pollution Volume 307, 15 August 2022, 119573). Other methods have improved the proximity between the heating element (in this case Cs⁺ cations ion-exchanged in a FAU zeolite) and the active sites, achieving remarkable selectivity for catalytic methane combustion under microwave heating (Fuminao Kishimoto et al., "Direct microwave energy input on a single cation for outstanding selective catalysis", Sci. Adv.9, eadi1744, 2023).

In addition to the above technologies, there is still a need to provide alternative hybrid catalytic materials wherein the catalyst may be enhanced by microwave absorbing additives, such that the additives can more effectively transfer heat in the context of catalysed industrial reactions.

### DETAILED DESCRIPTION OF THE INVENTION

In response to the above need, the present invention describes the integration of a heating phase embedded within a catalytic phase, such that the heating phase is completely contained within the catalytic phase. In a specific example, silicon carbide (SiC) nanoparticles are embedded within zeolite crystals. The hybrid material is obtained by synthesising the zeolite in the presence of SiC nanoparticles, resulting in a composite material consisting of zeolite crystals which entrap SiC nanoparticles. The hybrid material exhibits more efficient heating (less energy consumption at a constant conversion rate for a model reaction) and a significant increase in catalytic activity.

Thus, in a first aspect the invention relates to a catalytic composition comprising a catalytic phase and a heating phase, wherein the heating phase is embedded within the catalytic phase.

In embodiments of the invention, the catalytic phase is a catalytic material selected from the group consisting of a zeolite, a zeolite-like material, a metal oxide, and a metal-organic framework (MOF). As used herein, the term "zeolite" refers to microporous, crystalline aluminosilicate materials that have the general formula Mⁿ⁺_{1/n}(AlO₂)⁻(SiO₂)ₓ·yH₂O, where Mⁿ⁺_{1/n} is either a metal ion or H⁺. These positive ions can be exchanged in a contacting electrolyte solution. Zeolites are commonly used as commercial adsorbents and catalysts, and H⁺ exchanged zeolites are particularly useful as solid acid catalysts. Zeolites adopt a variety of structural architectures, wherein a zeolitic structural unit is understood as a "Secondary Construction Unit" (SBU), as defined by the International Zeolite Association (see, for example, https://europe.iza-structure.org/IZA-SC/SBUList.html). Under this definition, SBUs are finite or infinite (i.e., chain- or layer-shaped) units of construction that make up the structures of zeolites. In a particular embodiment, the catalytic phase is a zeolite. More particularly, the catalytic phase can be a synthetic zeolite (David J. Earl and Michael W. Deem, "Toward a Database of Hypothetical Zeolite Structures", Ind. Eng. Chem. Res. 2006, 45, 16, 5449-5454). In this context of the present invention, materials with a structure and function similar to that of zeolites may also be used. Thus, isomorphous substitution of zeolites, aluminophosphates, and silicoaluminophosphates may also be used to work the invention. Accordingly, in another particular embodiment, the catalytic phase is a zeolite-like material (Ying Ma et al., "A review of zeolite-like porous materials", Microporous and Mesoporous Materials, Volume 37, Issues 1-2, May 2000, Pages 243-252). In the context of the instant invention, the term "metal-organic frameworks" (MOFs) refers to porous polymers consisting of metal clusters (also known as Secondary Building Units, or SBUs) coordinated to organic ligands to form one-, two- or three-dimensional structures. The organic ligands can be referred to as "struts" or "linkers". Thus, in a particular embodiment, the catalytic phase is a MOF. In embodiments of the invention, the catalytic phase is a MOF selected from the group consisting of ZIF-8, MOF-5, HKUST-1 (Cu-BTC), UiO-66, MIL-101, and combinations thereof. In another particular embodiment of the invention, the catalytic phase is a metal oxide. In certain embodiments of the invention, the metal oxide is a binary oxide, a ternary oxide or a mixed oxide. As used herein, a binary oxide is a compound containing only oxide and another element; a ternary oxide is a compound containing oxide and two other elements (wherein the ternary oxide can be categorised, according to the ratio of metals (A/B) to oxide (O), into one of three groups: AB₂O₄, ABO_{2/3/4}, and A₃B₂O₈); and a mixed oxide is an oxide that contains cations of more than one chemical element or cations of a single element in several states of oxidation. In preferred embodiments of the invention, the metal oxide is selected from the group consisting of silica, alumina, ceria, zirconia, titanium oxide, iron oxide, magnetite (Fe²⁺Fe³⁺₂O₄), hematite (Fe₂O₃), vanadium (V) oxide (V₂O₅), cobalt-iron oxide, perovskite (CaTiOs), perovskite structures (^{XII}A^{2+VI}B⁴⁺O²⁻₃), hydroxyapatite (Ca₁₀(PO₄)₆(OH)₂) and hydrotalcite (Mg₆Al₂CO₃(OH)₁₆·4H₂O).

In embodiments of the invention, the catalytic material is modified with at least one functional group. In particular embodiments, the functional group can be selected from the group consisting of amine, phosphine, carbonyl, carboxylic, aromatic, alcohol, aliphatic chains and combinations thereof. In particular embodiments, the catalytic material can be modified with a polymer, including a cationic, an anionic and/or a neutral polymer. In embodiments, the polymer is selected from the group consisting of polyvinyl-pyrrolidone (PV), polyethyleneimine (PEI), poly(L-lysine) (PLL), carboxymethylcellulose (CMC), dextran sulfate, polyvinyl alcohol, poly(diallyldimethylammonium chloride), poly(acrylamide-co-diallyldimethylammonium chloride); N-(2-bromo-4-fluorophenyl)-3-(3,4-dihydroxyphenyl)-acrylamide.

In particular embodiments, the catalytic material can be grafted with metal complexes or metal clusters (Masaru Ichikawa et al., "Surface-grafted metal oxide clusters and metal carbonyl clusters in zeolite micropores; XAFS/FTIR/TPD characterization and catalytic behavior", Journal of Molecular Catalysis A: Chemical Volume 107, Issues 1-3, 6 May 1996, Pages 23-38). In other particular embodiments, the catalytic material is modified with an enzyme (Huaxin Zhang et al., "Progress and perspective of enzyme immobilization on zeolite crystal materials", Biochemical Engineering Journal Volume 172, August 2021, 108033).

In certain embodiments of the invention, the heating phase is a semiconducting material, a magnetic solid or alloy, a ferromagnetic composite, a dielectric material, an intrinsic conductive polymer, or a biomass-derived compound (Reza Peymanfar and Ali Mirkhan, "Biomass-derived materials: Promising, affordable, capable, simple, and lightweight microwave absorbing structures", Chemical Engineering Journal, Volume 446, Part 1, 15 October 2022, 136903). In particular embodiments, the heating phase is a material selected from the group consisting of silicon carbide (SiC), silicon nitride, titanium nitride, aluminium nitride, copper oxide, zinc oxide (ZnO), barium titanate (BaTiOs), titanium oxide, Fe₃O₄, ferrite (such as but not limited to CoFe₂O₄, ZnFe₂O₄, ZnFe₂O₄, Y₃Fe₅O₁₂, BaFe₁₂O₁₉), doped ferrite, carbon, carbon foam, carbon fibres, carbon nanotubes (CNT), hierarchical carbon, carbon nanosheets, graphene, graphene oxide, MXenes, steel, brass, aluminium, copper, tungsten, poly(pyrrole) (PPY), polycarbazole, polyindole, polyazepine, polyaniline (PANI), poly(thiophene) (PT), poly(3,4-ethylenedioxythiophene) (PEDOT), poly(p-phenylene sulphide) (PPS), poly(acetylene) (PAC), poly(p-phenylene vinylene) (PPV), Poly(fluorene), polyphenylene, polypyrene, polyazulene, polynaphthalene, polybenzodifurandione and combinations thereof. In a preferred embodiment, the heating phase is silicon carbide (SiC).

In an embodiment of the invention, the heating phase is a nanoparticle or a nanowire. As used herein, a nanoparticle is a particle of a size range of 1 to 100 nanometres (nm) in its larger dimension. In specific embodiments, the nanoparticles of the heating phase are of a size less than 50nm, less than 40nm, less than 30nm, less than 20nm, or less than 10nm. In a preferred embodiment, the nanoparticles of the heating phase are of a size in the range 1-10nm.

In embodiments of the invention, the heating phase is an amorphous material, or a crystalline material. As used herein, an amorphous material is a solid with a non-orderly three-dimensional structure such as that characteristic of a crystal. Amorphous materials include glasses, metallic glasses, and certain plastics and polymers. In contrast, a crystalline material is a solid whose constituents (i.e., atoms, molecules, or ions) are arranged in an ordered three-dimensional structure, forming a crystal lattice.

The heating phase is a material used in the context of the instant invention because it presents high MW and/or induction absorbing capacity, wherein the material is capable of dissipating absorbed electromagnetic energy as heat. In particular embodiments, the induction absorption capacity is expressed in terms of electrical conductivity and/or magnetic permeability (Yong Tae Kim et al., "Electricity-driven reactors that promote thermochemical catalytic reactions via joule and induction heating", Chemical Engineering Journal, Volume 470, 15 August 2023, 144333; Chao Huang et al., "Induction heating enables efficient heterogeneous catalytic reactions over superparamagnetic nanocatalysts", Chinese Chemical Letters, Volume 34, Issue 9, September 2023, 108101; Alexander Adogwa et al., "Catalytic Reaction Triggered by Magnetic Induction Heating Mechanistically Distinguishes Itself from the Standard Thermal Reaction", ACS Catalysis 2024, 14, 6, 4008-4017). In another particular embodiment, the microwave absorption capacity is expressed in terms of the tangent of loss angle (tan δ). In the context of the invention, the microwave absorption capacity can be categorised into "high" for tan δ > 0.5, "medium" for 0.1 < tan δ < 0.5, and "low" for tan δ < 0.1, when expressed in terms of the tangent of loss angle (tan δ) (Chaosheng Bao et al., "Microwave-associated chemistry in environmental catalysis for air pollution remediation: A review", Chemical Engineering Journal, Volume 466, 15 June 2023, 142902). Thus, in a particular embodiment, the heating phase is a material with a tan δ > 0.5. In the context of the invention, the heating phase has a higher microwave and/or induction absorption capacity than the catalytic phase. As used herein, the heating phase has a higher microwave and/or induction absorption capacity than the catalytic phase when there is a detectable, significant difference between said values such that the value corresponding to the heating phase is greater than the value corresponding to the catalytic phase.

As used herein, the term "embedded" means that the heating phase is entirely contained within the catalytic phase. In the context of the invention, the heating phase is considered embedded within the catalytic phase when at least 50%, at least 60%, at least 70%, at least 80%, at least 90%, at least 95%, at least 99%, or 100% of the heating phase is entirely contained within the catalytic phase.

In a second aspect, the invention refers to a method for the preparation of a catalytic composition according to the invention, wherein the catalytic phase is synthesised in the presence of the heating phase such that the heating phase is embedded within the catalytic phase. In the method of the invention, the heating phase is added to the synthesis mixture conductive to the preparation of a catalytic phase, then the catalytic phase is synthesised. After the preparation of the catalytic phase, the heating phase is embedded within the catalytic phase. Preparation of the catalytic phase may be carried out by any suitable method known to the skilled person. In embodiments of the method of the invention, the catalytic phase is prepared by a hydrothermal method, alkali fusion method, alkaline hydrothermal method, alkali-leaching method, sol-gel method, microwave synthesis, iono-thermal synthesis, solvothermal method, ultrasonic energy method (Khaleque et al., "Zeolite synthesis from low-cost materials and environmental applications: A review", Environmental Advances 2 (2020) 100019).

In particular embodiments of the invention, the catalytic phase and/or the heating phase are coated, functionalised, or modified with a polymer, chemical functional group, or biomolecule before the catalytic phase is synthesised.

In a final aspect, the invention relates to the use of the catalytic composition:
- as a catalyst in a chemical reaction;
- as an adsorbent in drying, purification or separation processes; or
- as an ion exchanger.

In a particular embodiment, the invention relates to the use of the catalytic composition as a as a catalyst in a chemical reaction. In certain embodiments, the chemical reaction is catalytic cracking, alkylation, acylation, isomerization, oligomerization, hydrocracking, hydrotreatment or biomass transformation processes. Non-limiting examples of reactions contemplated within the remit of the instant invention are indicated:
- Water-gas shift (WGS) reaction, wherein carbon monoxide and water vapor react to form carbon dioxide and hydrogen: CO + H₂O 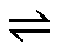 CO₂ + H₂ (Parisa Ebrahimi et al., "A review of recent advances in water-gas shift catalysis for hydrogen production", Emergent Materials (2020) 3:881-917).
- Reverse water-gas shift (RWGS) reaction converts carbon dioxide and hydrogen to syngas: CO₂ + H₂ 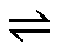 CO + H₂O (Magno F. Santos et al., "Carbon dioxide conversion via reverse water-gas shift reaction: Reactor design", Journal of Environmental Management, Volume 345, 1 November 2023, 118822).
- Methanol to hydrocarbons (MTH), whereby basic chemicals may be obtained without relying on an oil resource (Xinqiang Wu et al., "Dynamic Catalytic Mechanism of the Methanol-to-Hydrocarbons Reaction over Zeolites", Acc. Chem. Res. 2023, 56, 14, 2001-2014).
- CO₂ valorisation reactions, which aim at capturing CO₂ that has been (or is to be) released into the atmosphere (Jiban Podder et al., "A Review of Carbon Capture and Valorization Technologies", Energies 2023, 16(6), 2589).
- Condensation reactions, such as the aldol condensation reaction to form C-C single bonds and result in long-length chains (Ling Huang et al., "Aldol condensation reaction in hierarchical ZSM-5 zeolite: A molecular dynamics simulation", Microporous and Mesoporous Materials, Volume 348, 15 January 2023, 112393).

As an example of a particular embodiment, the chemical reaction is the Friedel-Crafts (FC) alkylation of mesitylene with benzyl alcohol (BA).

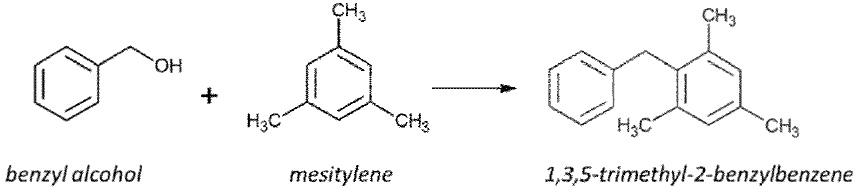

All the terms and embodiments described anywhere in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

### EXAMPLES

The following invention is hereby described by way of the following examples, which are to be construed as merely illustrative and not limitative of the scope of the invention.

### Example 1: Preparation of ferrierite (FER) zeolite crystals embedded with silicon carbide (SiC) nanoparticles

Ferrierite (FER) zeolite crystals were synthesised in the presence of silicon carbide (SiC) nanoparticles, resulting in a composite material consisting of FER crystals with SiC nanoparticles inside (FER@SiC). Ethylenediamine (en) was used as Organic Structure Directing Agent (OSDA) along with sodium hydroxide, sodium aluminate, and colloidal Silica (LUDOX HS-30) as sodium, aluminium, and silicon sources, respectively. The initial gel with a molar composition of 19.7 en: 1.85 NazO: 15.2 SiO₂: 1.0 Al₂O₃: 590.0 H₂O was crystallized in a microwave reactor at 180 °C for 72 hours. Before the synthesis, 5 g of SiC (nanopowder, <100 nm particle size, code 594911) was pretreated with 1.25 g of poly(diallyldimethylammonium chloride) (PDDA) in ethanol (25 mL). In the case of FER@SiC, up to 33% (w./w.) of SiC combined with PDDA was added to the initial gel before aging. The catalysts were calcined at 550 °C for 8 h to remove OSDA. The new material was compared with pure ferrierite zeolite crystals (FER) and with a physical mixture of FER zeolite and SiC nanoparticles (FER/SiC).

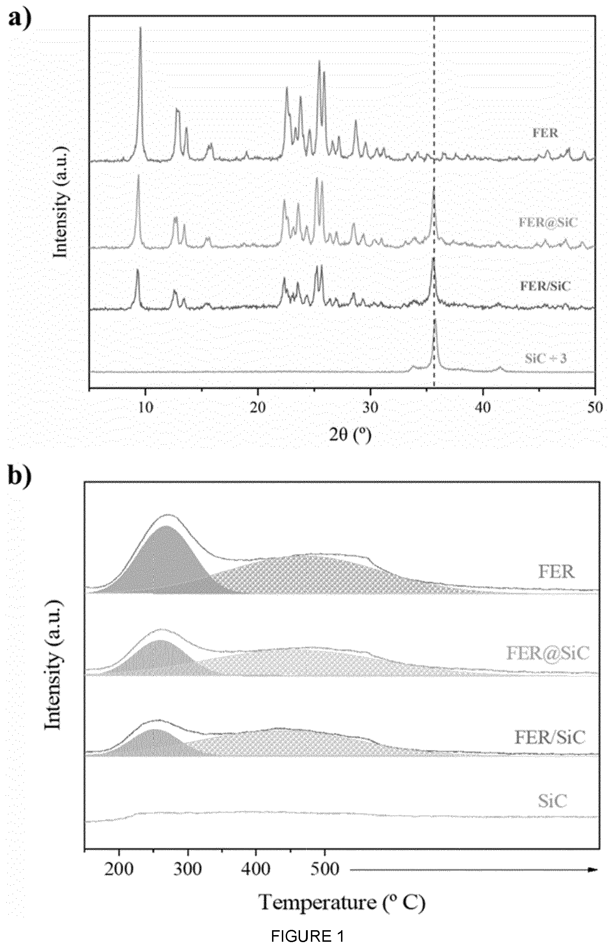

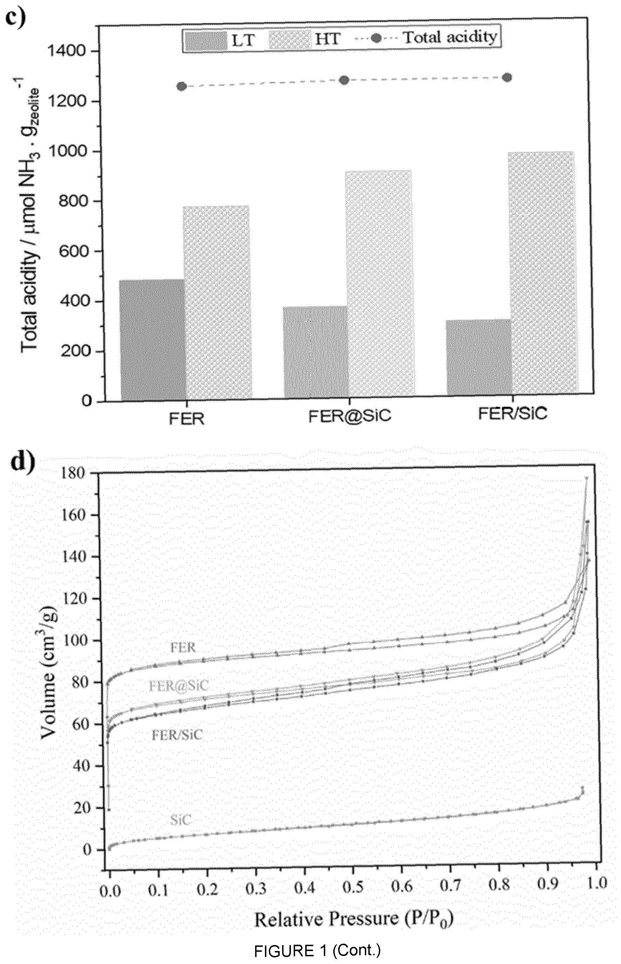

All the zeolite-containing materials used in this study comprised highly crystalline ferrierite (FER), as observed by X-ray diffraction analysis (Figure 1a), with no other crystalline phase detected except for the SiC added. The composite material (FER@SiC), prepared under the same conditions as the pure FER sample but in the presence of SiC nanoparticles, shows the same XRD pattern in addition to the characteristic diffraction peaks attributable to SiC. The reduction in intensity is due to the (one third) lower amount of zeolite in the composite (in a composite material made of 2/3 of zeolite and 1/3 of SiC). The acidic properties of the samples were determined by temperature-programmed desorption of ammonia (NH₃-TPD) (Table 1 and Figure 1b-c), further confirming that the main properties of the zeolite, in this case total acidity, are not affected by the presence of SiC. When compared at constant zeolite content, the acidity profiles of the materials show no significant differences that could be attributed to the presence of SiC. Textural characterisation of the materials (Table 1 and Figure 1c) shows that the textural properties of FER and FER@SiC are comparable when the results are normalised by the amount of zeolite in the composite (approximately 33 wt% reduction) (in a composite material made of 2/3 of zeolite and 1/3 of SiC), and these results exclude any significant pore blocking due to the presence of SiC in the FER@SiC sample. It is important to note that, when the mesopore volume is normalised by the zeolite mass, a higher value is observed, mainly due to the contribution of microporosity within the SiC.

**Table 1. Textural and acidic properties of synthesized materials and SiC.**

| **Catalyst** | **S_{BET} (m²/g_{cat})** | **S_{BET} (m²/ g_{zeolite})** | **V_{mic} ^{[a]} (cm³/g_{cat})** | **V_{mic} ^{[a]} (cm³/ g_{zeolite})** | **Vₘₑₛₒ ^{[a]} (cm³/g_{cat})** | **Vₘₑₛₒ ^{[a]} (cm³/ g_{zeolite})** | **Total acidity (µmol/ g_{zeolite})** |
|---|---|---|---|---|---|---|---|
| FER | 365 | 365 | 0.13 | 0.13 | 0.11 | 0.11 | 1254 |
| FER@SiC | 234 | 351 | 0.08 | 0.12 | 0.12 | 0.16 | 1268 |
| FER/SiC | 261 | 380 | 0.11 | 0.16 | 0.04 | 0.04 | 1349^{[b]} |
| SiC | 30 | - | < 0.01 | - | 0.04 | - | 190 |

| | | | | | | | |
|---|---|---|---|---|---|---|---|
| [a] Micro- and mesopore volumes calculated through non-local density functional theory (NLDFT). [b] Total acidity of the physical mixture calculated as weighted average between FER and SiC. | | | | | | | |

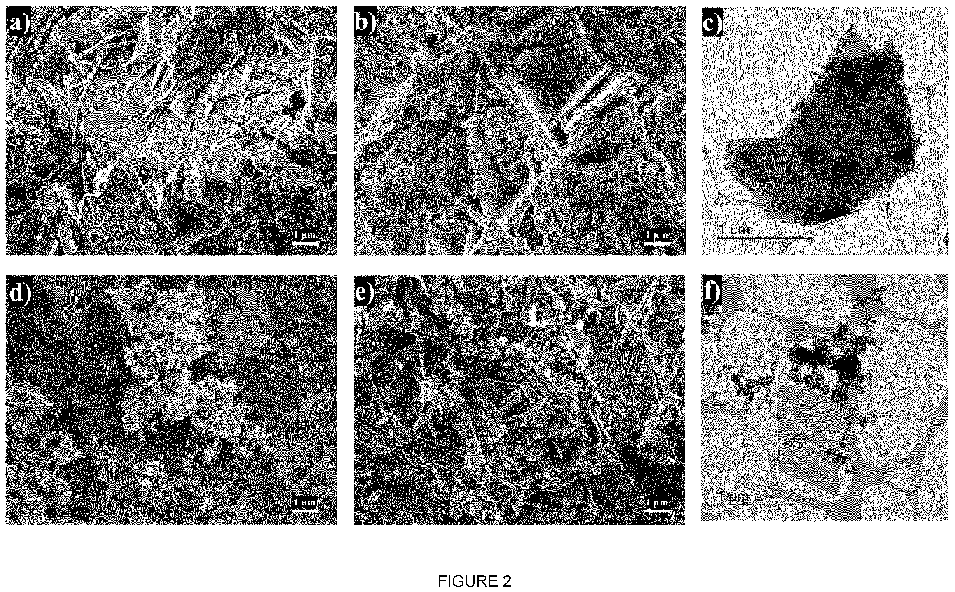

Scanning Electron Microscopy (SEM) micrographs of FER (Figure 2a), FER@SiC (Figure 2b), and FER/SiC (Figure 2e) show that the characteristic plate-like morphology of the FER zeolite is not affected by the addition of the SiC nanoparticles (Figure 2d), even if SiC nanoparticles are present during the synthesis of the FER@SiC composite. Thus, any differences in catalytic performance cannot be attributed to morphological changes. In contrast, Transmission Electron Microscopy (TEM) images (Figure 2c and 2f) distinguish the FER@SiC composite from the FER/SiC physical mixture. Remarkably, SiC particles are embedded by Ferrierite crystals in FER@SiC, whereas in FER/SiC, this interconnection is not evident.

The acidic, textural, structural, and morphological characterisations of the samples show that the zeolite in the FER@SiC composite and in the FER/SiC physical mixtures is basically identical to the pure FER phase.

### Example 2: Differences in catalytic activity between FER, FER/SiC, and FER@SiC

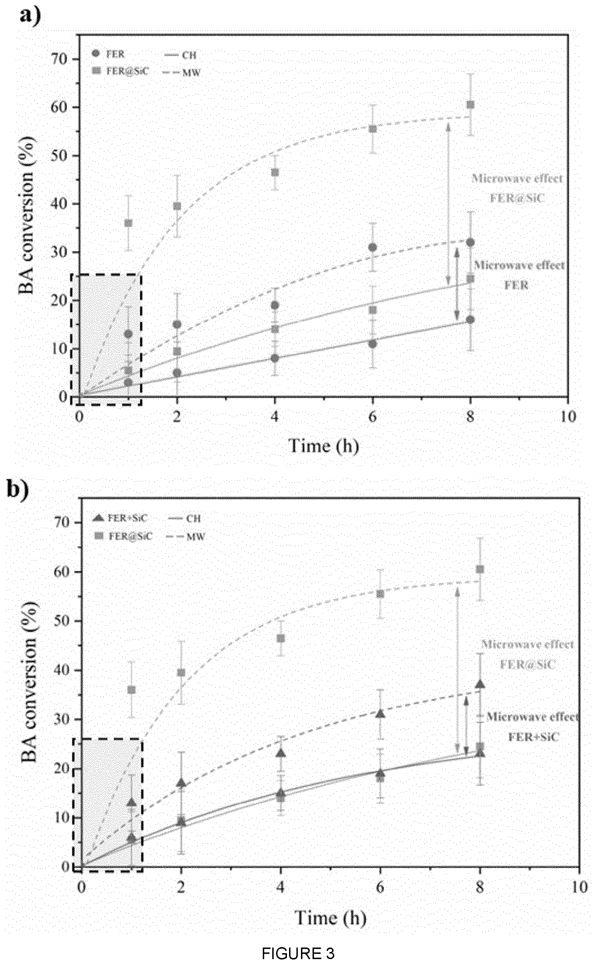

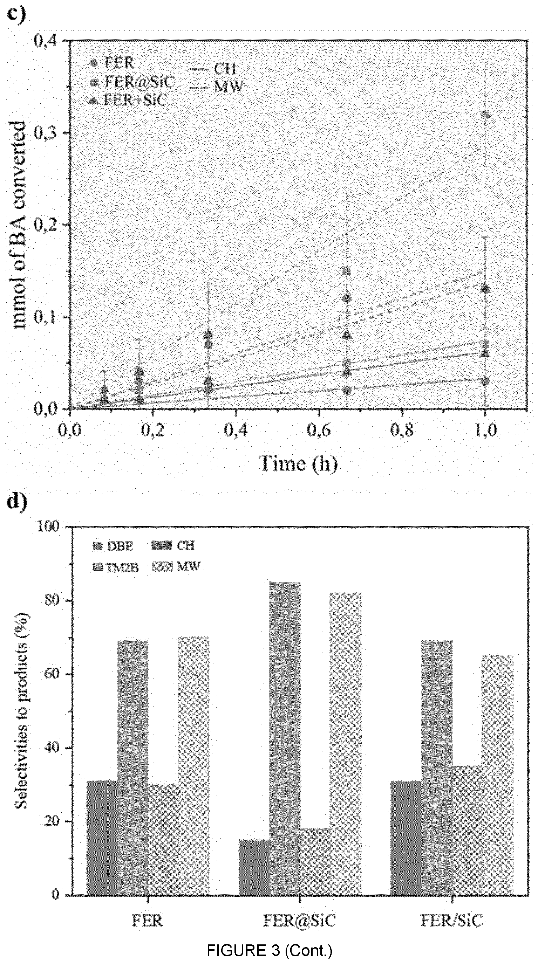

A striking difference in catalytic activity is observed when using the Friedel-Crafts (FC) alkylation of mesitylene with benzyl alcohol (BA) as a model reaction, especially under MW irradiation (Figure 3). Figure 3a shows the conversion rates of benzyl alcohol (BA) in the present of catalysts FER or FER@SiC under both conventional (CH) and MW heating. Under conventional heating, both materials show similar conversion rates, with FER@SiC showing slightly better performance, ca. 6% higher. However, under microwave irradiation, FER@SiC shows a remarkable 2.5-fold increase in catalytic activity compared to FER. More interestingly, FER@SiC and FER/SiC, which behave almost identically under conventional heating, are significantly different under MW irradiation (Figure 3b). The intimate contact between SiC and FER in FER@SiC, obtained by growing the zeolite crystals around the SiC nanoparticles, results in a 2.2-fold improvement over the physical mixture. This result clearly demonstrates the importance of the intimate contact between the heating and catalyst phases and shows the potential of the technique disclosed herein.

Interestingly, and despite the significant increase in activity observed when the SiC and FER were in intimate contact in the FER@SiC composite, no change in selectivity was observed for any of the systems under either conventional or MW heating (Figure 3d). The slight improvement in the production of the alkylation product (1,3,5-trimethyl-2-benzylbenzene) for FER@SiC could be due to a combination of micro- and mesoporous structures that improve selectivity. These results highlight once again that the intrinsic properties of the zeolite, which determine its selectivity, are basically unaffected by the presence of SiC, which only acts as a heating element without significantly altering the intrinsic catalytic properties of the zeolite.

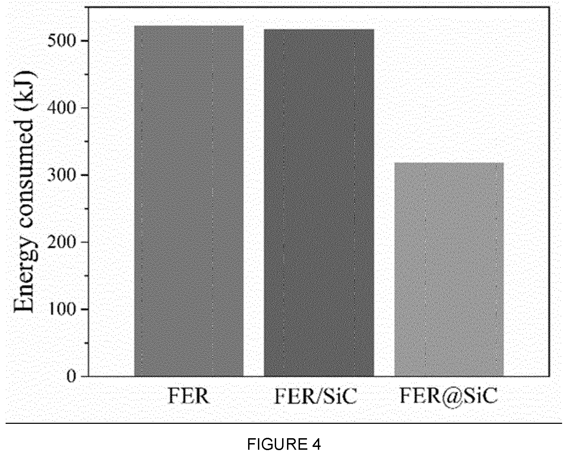

The remarkable role played by the intimate contact between the heating element (SiC) and the catalytic phase (FER) is well illustrated in Figure 4, which shows the energy consumption required to achieve 15% conversion. It is noteworthy that FER@SiC requires only about 60% of the energy input necessary for the reaction catalysed by either FER or FER/SiC. This result further confirms that simply blending high MW absorbing materials with a catalytic material is not a very effective way of accelerating MW heating due to poor contact. The significant improvement in the performance of FER@SiC could be attributed to the efficient heat transfer from SiC to the reactants, facilitated by the close contact with the acidic sites of the zeolite. This efficient energy transfer under microwave heating could explain the observed improvement in catalytic activity for FER@SiC.

By simply incorporating SiC nanoparticles into FER zeolite crystals during their synthesis, the inventors were able to achieve a remarkable 2.2-fold increase in catalytic activity in the Friedel-Crafts alkylation of mesitylene with benzyl alcohol under microwave heating over the SiC-free system, and a similar improvement over the physical mixture of SiC with FER zeolite crystals. These findings underscore the critical role of the intimate contact between the heating medium (SiC) and the catalytic phase (FER zeolite) in facilitating effective microwave-assisted catalysis, as evidenced by the superior conversion rate, close to 2.5-fold, and a remarkable reduction in energy consumption, exceeding 60%, when comparing the FER zeolites with associated SiC nanoparticles prepared by the two different methods (i.e., FER@SiC vs. FER/SiC). These results open new opportunities for the rational design of more efficient zeolite-based catalysts, thus advancing the field of microwave chemistry towards greater attractiveness and practicality.

### DESCRIPTION OF THE DRAWINGS

Figure 1. a) XRD patterns of the FER, FER@SiC and SiC samples; b) NH₃-TPD of the FER, FER@SiC, and SiC samples; and N₂ physisorption isotherms at 77 K of FER, FER@SiC and SiC in c) linear scale and d) semilog scale at micropore region.
Figure 2. SEM images of a) FER, b) FER@SiC, d) SiC, and d) FER/SiC; and TEM images of c) FER@SiC and f) FER/SiC.
Figure 3. Conversion profiles of BA over times for a) FER and FER@SiC, b) FER/SiC, FER@SiC, and c) amount of BA converted at short times for for all three materials. d) Selectivities towards dibenzyl ether (DBE) and 1,3,5-trimethyl-2-benzylbenzene (TM2B) under both conventional (solid) and microwave heating (lines) for FER, FER@SiC, and FER/SiC at an isoconversion of 15% in in the Friedel-Crafts alkylation with 95 mmol of mesitylene, 1 mmol of benzyl alcohol, and 100 mg of zeolite at 120 °C.
Figure 4. Energy consumed for each catalyst at 15% benzyl alcohol (BA) isoconversion in the microwave reactor with 95 mmol of mesitylene, 1 mmol of benzyl alcohol, and 100 mg of zeolite at 120 °C.

## Claims

1. A catalytic composition comprising a catalytic phase and a heating phase, wherein the heating phase is embedded within the catalytic phase.

2. The catalytic composition according to claim 1, wherein the catalytic phase is a catalytic material selected from the group consisting of a zeolite, a zeolite-like material, a metal oxide, and a metal organic framework (MOF).

3. The catalytic composition according to claim 2, wherein the metal oxide is selected from the group consisting of silica, alumina, ceria, zirconia, titanium oxide, iron oxide, magnetite, hematite, vanadium (V) oxide, cobalt-iron oxide, perovskite, perovskite structures, hydroxyapatite and hydrotalcite.

4. The catalytic composition according to any one of claims 1 to 3, wherein the catalytic material is modified with at least one functional group.

5. The catalytic composition according to any one of claims 1 to 4, wherein the heating phase is a material with a tan δ > 0.5.

6. The catalytic composition according to any one of claims 1 to 5, wherein the heating phase is a material selected from the group consisting of silicon carbide (SiC), silicon nitride, titanium nitride, aluminium nitride, copper oxide, zinc oxide (ZnO), barium titanate (BaTiO₃), titanium oxide, Fe₃O₄, ferrite (such as but not limited to CoFe₂O₄, ZnFe₂O₄, ZnFe₂O₄, Y₃Fe₅O₁₂, BaFe₁₂O₁₉), doped ferrite, carbon, carbon foam, carbon fibres, carbon nanotubes (CNT), hierarchical carbon, carbon nanosheets, graphene, graphene oxide, MXenes, steel, brass, aluminium, copper, tungsten, poly(pyrrole) (PPY), polycarbazole, polyindole, polyazepine, polyaniline (PANI), poly(thiophene) (PT), poly(3,4-ethylenedioxythiophene) (PEDOT), poly(p-phenylene sulphide) (PPS), poly(acetylene) (PAC), poly(p-phenylene vinylene) (PPV), Poly(fluorene), polyphenylene, polypyrene, polyazulene, polynaphthalene, polybenzodifurandione and combinations thereof.

7. The catalytic composition according to any one of claims 1 to 6, wherein the heating phase is a nanoparticle.

8. The catalytic composition according to any one of claims 1 to 7, wherein the heating phase is an amorphous material, or a crystalline material.

9. A method for the preparation of a catalytic composition according to any one of claims 1 to 8, wherein the catalytic phase is synthesised in the presence of the heating phase such that the heating phase is embedded within the catalytic phase.

10. The method according to claim 9, wherein the catalytic phase and/or the heating phase are coated, functionalised, or modified with a polymer, chemical functional group, or biomolecule before the catalytic phase is synthesised.

11. Use of a catalytic composition according to any one of claims 1 to 8, as a catalyst in a chemical reaction.

12. The use according to claim 11, wherein the chemical reaction is catalytic cracking, alkylation, acylation, isomerization, oligomerization, hydrocracking, hydrotreatment or biomass transformation processes.

13. The use according to any one of claims 11 or 12, wherein the chemical reaction is:
- a water-gas shift (WGS) reaction,
- a reverse water-gas shift (RWGS) reaction
- a methanol-to-hydrocarbons (MTH) reaction,
- a CO₂ valorisation reaction, or
- a condensation reaction.

14. Use of a catalytic composition according to any one of claims 1 to 8, as an adsorbent in drying, purification or separation processes.

15. Use of a catalytic composition according to any one of claims 1 to 8, as an ion exchanger.
